# EUROPEAN PATENT APPLICATION

(11) **EP 4 851 443 A1**
(43) Date of publication of application: **09.12.2026**
(21) Application number: 26176856.8
(22) Date of filing: 06.05.2026
(51) Int. Cl.: F02C 7/22, F01D 25/02

(54) **ICE CAPTURING DEVICE FOR A GAS TURBINE AIRCRAFT ENGINE FUEL SYSTEM**

(30) Priority: 06.06.2025 GB 202508909
(71) Applicant: Rolls-Royce plc, London N1 9FX (GB)
(72) Inventor: Keeler, Benjamin J, Derby, DE24 8BJ (GB)
(74) Representative: Rolls-Royce plc

(57) **Abstract**

An ice capturing device (500, 600) for a gas turbine aircraft engine fuel system (100, 200, 300, 400) has a housing (502) that has an inlet portion (508) that defines at least one inlet port (510). The housing (502) is configured to receive a fuel flow (F1) therewithin via the at least one inlet port (510) and it has an outlet portion (512) that defines at least one outlet port (514). The fuel flow (F1) is configured to exit the housing (502) via the at least one outlet port (514). The ice capturing device (500, 600) has a strainer (520, 620) that is disposed within the housing (502) and coupled with at least the inlet portion (508). The strainer (520, 620) is configured to collect transient ice (I) present in the fuel flow (F1). The inlet portion (508) includes a plate (516) that defines a plurality of bypass ports (518). A bypass fuel flow (F2) is directed from the at least one inlet port (510) towards the at least one outlet port (514) via the plurality of bypass ports (518) when the strainer (520, 620) is filled with the transient ice (I).

## Description

### FIELD

This disclosure relates generally to a gas turbine engine, a gas turbine aircraft engine fuel system, an ice capturing device for the gas turbine aircraft engine fuel system, and a method for controlling a flow of transient ice through the gas turbine aircraft engine fuel system.

### BACKGROUND

Aviation fuel plays a critical role in operation of a gas turbine engine, such as those used in aircrafts. Typically, the aviation fuel may contain a small fraction of water, which is permissible and expected within certain limits. A fuel system is associated with the gas turbine engine to supply the aviation fuel to the gas turbine engine. The fuel system is designed to tolerate a level of water contamination however if this water turns to ice, a threat may be presented to components of the fuel system as well as the gas turbine engine. Specifically, under certain operational conditions, such as low temperatures, water present in the aviation fuel can freeze forming ice, and in rare events ice may accumulate (accrete) in an aircraft feed pipework to the gas turbine engine. Such ice may be subsequently released as a slug of high concentration ice which is also termed as "transient ice" or "snow shower".

Generally, a formation of transient ice may cause a blockage of downstream fuel system components. This is particularly concerning during critical flight conditions when rapid engine acceleration is required. Such a blockage due to transient ice formation may reduce gas turbine engine power, thereby preventing the gas turbine engine from accelerating as needed. This situation, known as "Loss of Thrust Control" (LOTC), is undesirable and may compromise operational safety. In some operations, the gas turbine engine may shut down in flight if the presence of transient ice in the aviation fuel is not minimised as their accumulation may block the fuel flow in the fuel system.

### SUMMARY

In a first aspect, there is provided an ice capturing device for a gas turbine aircraft engine fuel system. The ice capturing device includes a housing defining a first end and a second end opposite the first end. The housing includes an inlet portion disposed at the first end of the housing and defining at least one inlet port. The housing is configured to receive a fuel flow therewithin via the at least one inlet port. The housing further includes an outlet portion disposed at the second end of the housing and defining at least one outlet port. The fuel flow is configured to exit the housing via the at least one outlet port. The ice capturing device further includes a strainer disposed within the housing and coupled with at least the inlet portion. The strainer extends from the first end towards the second end. The at least one inlet port is in fluid communication with the at least one outlet port via the strainer. The strainer is configured to collect transient ice present in the fuel flow therewithin. The inlet portion includes a plate disposed between the first and second ends. The plate defines a plurality of bypass ports. A bypass fuel flow is directed from the at least one inlet port towards the at least one outlet port via the plurality of bypass ports when the strainer is filled with the transient ice.

The ice capturing device is installed within the gas turbine aircraft engine fuel system to remove or at least minimise a presence of transient ice in the fuel being supplied to a gas turbine engine. Thus, the ice capturing device may advantageously minimise problems occurring due to presence of the transient ice along a fuel line of the gas turbine aircraft engine fuel system. The ice capturing device may protect components of the gas turbine aircraft engine fuel system and the gas turbine engine from blockages. The ice capturing device may be simple in design, easy to manufacture, and cost-effective to manufacture and install.

The design of the ice capturing device may effectively capture and manage the transient ice, may prevent blockages in downstream components of the gas turbine aircraft engine fuel system and the gas turbine engine, may optimize fuel flow management, and may enhance a reliability of the gas turbine aircraft engine fuel system by preventing ice-induced disruptions. The ice capturing device may be disposed at a number of locations in the gas turbine aircraft engine fuel system, based on application requirements. Further, the ice capturing device may be disposed by making minimum adjustments to the gas turbine engine and/or the gas turbine aircraft engine fuel system.

Further, the capturing of the transient ice by the ice capturing device may prevent a reduction in engine power and may allow acceleration of the gas turbine engine as needed. Furthermore, the capturing of the transient ice by the ice capturing device may reduce a probability of situations, such as "Loss of Thrust Control" (LOTC).

When the strainer of the ice capturing device becomes saturated with the transient ice, the bypass fuel flow is activated, allowing the fuel to bypass the strainer, ensuring uninterrupted fuel flow to the gas turbine engine. Thus, the plurality of bypass ports allow the bypass fuel flow from the ice capturing device that may ensure an uninterrupted fuel flow to the gas turbine engine, while preventing blockages in downstream components of the gas turbine aircraft engine fuel system. In this way, the fuel flow can exit the ice capturing device even when the the ice capturing device is clogged with ice.

In some embodiments, the plate defines a chamber in fluid communication with each of the plurality of bypass ports. The chamber is configured to receive the bypass fuel flow from the at least one inlet port and direct the bypass fuel flow towards the plurality of bypass ports. Thus, the chamber may facilitate a receipt of the bypass fuel flow via the inlet port and direct the bypass fuel flow towards the outlet ports via the bypass ports.

In some embodiments, the at least one inlet port is a single inlet port. The single inlet port is centrally disposed and allows an entry of the fuel into the ice capturing device.

In some embodiments, the at least one outlet port includes a plurality of outlet ports. The plurality of outlet ports is arranged around the strainer to receive the fuel flow via the strainer and eventually direct the fuel flow out of the ice capturing device.

In some embodiments, the strainer defines a plurality of openings to allow passage of the fuel flow therethrough. A size of each of the plurality of openings is from 150 micrometres (µm) to 1000 µm. The plurality of openings may be arranged in a mesh pattern that may allow a passage of fuel therethrough, while restricting the solid particles of the transient ice within the strainer.

In some embodiments, the housing is cylindrical in shape. The cylindrical housing may support an elongate straining element. However, the housing may have any other shape, as per requirements.

In some embodiments, the strainer is made of a metallic material. The material of the strainer may be decided such that the strainer may withstand high fuel pressures and mechanical stresses without failure.

In some embodiments, the strainer is made of aluminium or stainless steel.

In some embodiments, the strainer is cylindrical in shape or frustoconical in shape. The strainer having the cylindrical or frustoconical shape may be easy to incorporate within the housing.

In some embodiments, the strainer is concentrically disposed within the housing. In this way, the fuel flow through the strainer may be evenly distributed to the plurality of outlet ports.

In a second aspect, there is provided a gas turbine aircraft engine. The gas turbine aircraft engine fuel system includes a filter. The gas turbine aircraft engine fuel system further includes a fuel metering unit disposed downstream of the filter. The gas turbine aircraft engine fuel system further includes the ice capturing device of the first aspect. The ice capturing device may protect critical components of the gas turbine aircraft engine fuel system, such as, the fuel metering unit and/or a high pressure fuel pump and may also ensure a continuous supply of the fuel flow to the gas turbine engine.

In some embodiments, the ice capturing device is disposed downstream of the filter, in a bypass line of the filter, and/or downstream of the fuel metering unit. In some cases, the filter may capture most of the incoming transient ice present in the fuel. However, some of the transient ice may still appear downstream, either due to filter bypass or because water passes through the filter and later re-freezes due to local phenomenon. In this way, the ice capturing device may be suitably disposed downstream of the filter, in the bypass line of the filter, and/or downstream of the fuel metering unit to capture any transient ice that may not have been captured by the filter. Additionally, the ice capturing device when disposed downstream of the filter, in the bypass line of the filter, and/or downstream of the fuel metering unit may protect a high pressure strainer of the gas turbine aircraft engine fuel system from blockages. The positioning of the ice capturing device at the aforementioned locations may ensure a steady, a consistent, and an adequately pressurized fuel supply to the gas turbine engine, which may enhance fuel control. The ice capturing device may also provide safety benefits, reduce a risk of contamination and damage, and may improve the reliability, a longevity, and an efficiency of the gas turbine aircraft engine fuel system. As the fuel metering unit may contain sensitive components, it is desirable that only filtered fuel is provided to the fuel metering unit. Thus, the ice capturing device may provide enhanced engine reliability, and a longer service life for critical components of the gas turbine aircraft engine fuel system.

In some embodiments, the filter is a low pressure filter. Thus, the ice capturing device may be disposed downstream of the low pressure filter and/or in the bypass line of the low pressure filter to prevent ice from flowing towards and blocking the critical components of the gas turbine aircraft engine fuel system that are positioned downstream of the low pressure filter.

In some embodiments, the filter is a high pressure filter. Thus, the ice capturing device may be disposed downstream of the high pressure filter and/or in the bypass line of the high pressure filter to prevent ice from flowing towards and blocking the critical components of the gas turbine aircraft engine fuel system that are positioned downstream of the high pressure filter.

In a third aspect, there is provided a gas turbine engine. The gas turbine engine includes the gas turbine aircraft engine fuel system of the second aspect.

In a fourth aspect, there is provided a method for controlling a flow of transient ice through a gas turbine aircraft engine fuel system. The method includes providing an ice capturing device including a housing defining a first end and a second end opposite the first end. The housing includes an inlet portion disposed at the first end of the housing and defining at least one inlet port. The housing further includes an outlet portion disposed at the second end of the housing and defining at least one outlet port. The ice capturing device further includes a strainer disposed within the housing and coupled with at least the inlet portion. The strainer extending from the first end towards the second end, the at least one inlet port being in fluid communication with the at least one outlet port via the strainer. The method further includes receiving, via the at least one inlet port, a fuel flow within the housing. The method further includes collecting transient ice present in the fuel flow within the strainer based on a receipt of the fuel flow via the at least one inlet port. The method further includes causing the fuel flow to exit the housing via the at least one outlet port. The inlet portion includes a plate disposed between the first and second ends. The plate defining a plurality of bypass ports. The method further includes directing a bypass fuel flow from the at least one inlet port towards the at least one outlet port via the plurality of bypass ports when the strainer is filled with the transient ice.

The method may be employed within the gas turbine aircraft engine fuel system to remove or at least minimise a presence of transient ice in the fuel being supplied to a gas turbine engine. Thus, the method may advantageously minimise problems occurring due to presence of the transient ice along a fuel line of the gas turbine aircraft engine fuel system. The method described herein may protect components of the gas turbine aircraft engine fuel system and the gas turbine engine from blockages. The ice capturing device used to realize the method may be simple in design, easy to manufacture, and cost-effective to manufacture and install.

The method may allow effective capturing and managing of the transient ice, may prevent blockages in downstream components of the gas turbine aircraft engine fuel system and the gas turbine engine, may optimize fuel flow management, and may enhance a reliability of the gas turbine aircraft engine fuel system by preventing ice-induced disruptions. The ice capturing device may be disposed at a number of locations in the gas turbine aircraft engine fuel system, based on application requirements. Further, the ice capturing device may be disposed by making minimum adjustments to the gas turbine engine and/or the gas turbine aircraft engine fuel system.

Further, the capturing of the transient ice using the method described herein may prevent a reduction in engine power and may allow acceleration of the gas turbine engine as needed. Furthermore, the capturing of the transient ice using the method described herein may reduce a probability of situations, such as "Loss of Thrust Control" (LOTC).

When the strainer of the ice capturing device becomes saturated with the transient ice, the bypass fuel flow is activated, allowing the fuel to bypass the strainer, ensuring uninterrupted fuel flow to the gas turbine engine. Thus, the plurality of bypass ports allow the bypass fuel flow from the ice capturing device that may ensure the uninterrupted fuel flow to the gas turbine engine, while preventing blockages in downstream components of the gas turbine aircraft engine fuel system. In this way, the fuel flow can exit the ice capturing device even when the the ice capturing device is clogged with ice.

In some embodiments, the plate defines a chamber in fluid communication with each of the plurality of bypass ports. The method further includes receiving the bypass fuel flow within the chamber. The method further includes directing the bypass fuel flow towards the plurality of bypass ports via the chamber. Thus, the chamber may facilitate a receipt of the bypass fuel flow via the inlet port and direct the bypass fuel flow towards the outlet ports via the bypass ports.

In some embodiments, the method further includes causing the transient ice that is separated from the fuel flow to melt based on an increase in a temperature within the housing. The method further includes causing water, that is generated based on melting of the transient ice, to flow downstream of the ice capturing device via the at least one outlet port. Thus, the ice capturing device does not require any additional mechanism or maintenance strategies to remove the clogged transient ice that may be retained therein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only with reference to the accompanying drawings, in which:
**FIG. 1** shows a schematic side view of a gas turbine engine;
**FIG. 2** shows a schematic view of a gas turbine aircraft engine fuel system for the gas turbine engine of FIG. 1, in accordance with an embodiment of the present disclosure;
**FIG. 3** shows a schematic view of a gas turbine aircraft engine fuel system for the gas turbine engine of FIG. 1, in accordance with another embodiment of the present disclosure;
**FIG. 4** shows a schematic view of a gas turbine aircraft engine fuel system for the gas turbine engine of FIG. 1, in accordance with yet another embodiment of the present disclosure;
**FIG. 5** shows a schematic view of a gas turbine aircraft engine fuel system for the gas turbine engine of FIG. 1, in accordance with yet another embodiment of the present disclosure;
**FIG. 6A** shows a schematic perspective view of an ice capturing device for the gas turbine aircraft engine fuel system of the gas turbine engine of FIG. 1, in accordance with an embodiment of the present disclosure;
**FIG. 6B** shows a schematic perspective view of the ice capturing device of FIG. 6A depicting a collection of the transient ice in the ice capturing device;
**FIG. 7A** shows a schematic perspective view of an ice capturing device for the gas turbine aircraft engine fuel system of the gas turbine engine of FIG. 1, in accordance with another embodiment of the present disclosure;
**FIG. 7B** a schematic perspective view of the ice capturing device of FIG. 7A depicting a collection of the transient ice in the ice capturing device; and
**FIG. 8** shows a flowchart depicting various steps of a method for controlling a flow of transient ice through the gas turbine aircraft engine fuel system of the gas turbine engine of FIG. 1.

### DETAILED DESCRIPTION

Aspects and embodiments of the present disclosure will now be discussed with reference to the accompanying figures. Further aspects and embodiments will be apparent to those skilled in the art.

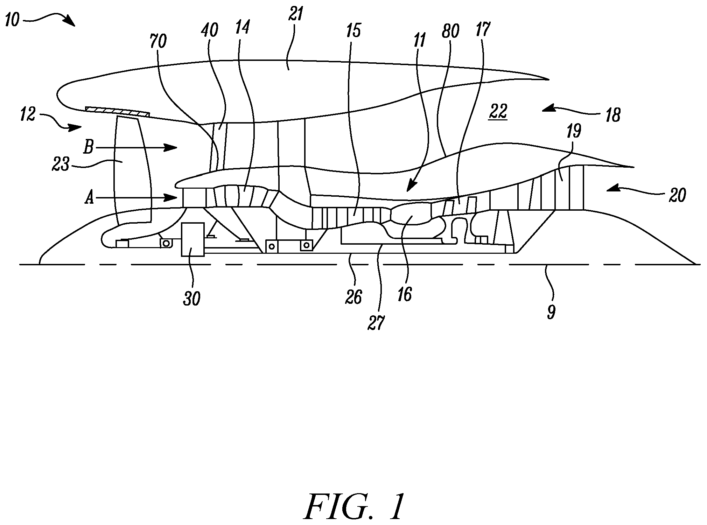

**FIG. 1** shows a schematic side view of a gas turbine engine 10 having a principal rotational axis 9. The gas turbine engine 10 includes an air intake 12 and a fan 23 that generates two airflows: a core airflow A and a bypass airflow B. The gas turbine engine 10 includes an engine core 11 that receives the core airflow A. In other words, the core airflow A enters the engine core 11. The fan 23 is located upstream of the engine core 11. The fan 23 includes a plurality of blades (not shown) that upon rotating, generates the core airflow A and the bypass airflow B.

The engine core 11 includes, in axial flow series, a compressor 14, 15, a combustion chamber 16, and a turbine 17, 19. Specifically, the engine core 11 includes, in axial flow series, a low pressure compressor 14, a high pressure compressor 15, a combustion chamber 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22 surrounding the engine core 11. The bypass airflow B flows through the bypass duct 22 to provide propulsive thrust, where it is straightened by a row of outer guide vanes 40 before exiting the bypass exhaust nozzle 18. The outer guide vanes 40 extend radially outwardly from an inner ring 70 which defines a radially inner surface of the bypass duct 22. Rearward of the outer guide vanes 40, the engine core 11 is surrounded by an inner cowl 80 which provides an aerodynamic fairing defining an inner surface of the bypass duct 22. The inner cowl 80 is rearwards of and axially spaced from the inner ring 70. The inner ring 70 defines the inner surface of the bypass duct 22. The fan 23 is attached to and driven by the low pressure turbine 19. In some examples, the fan 23 may be driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion chamber 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. A core shaft 27 connects the turbine 17, 19 to the compressor 14, 15. Specifically, the high pressure turbine 17 drives the high pressure compressor 15 by the suitable core shaft 27 or an interconnecting shaft. The fan 23 generally provides most of the propulsive thrust. The epicyclic gearbox 30 may be a reduction gearbox. However, the gas turbine engine 10 may omit the epicyclic gearbox 30, and may have a different engine turbomachinery, without any limitations.

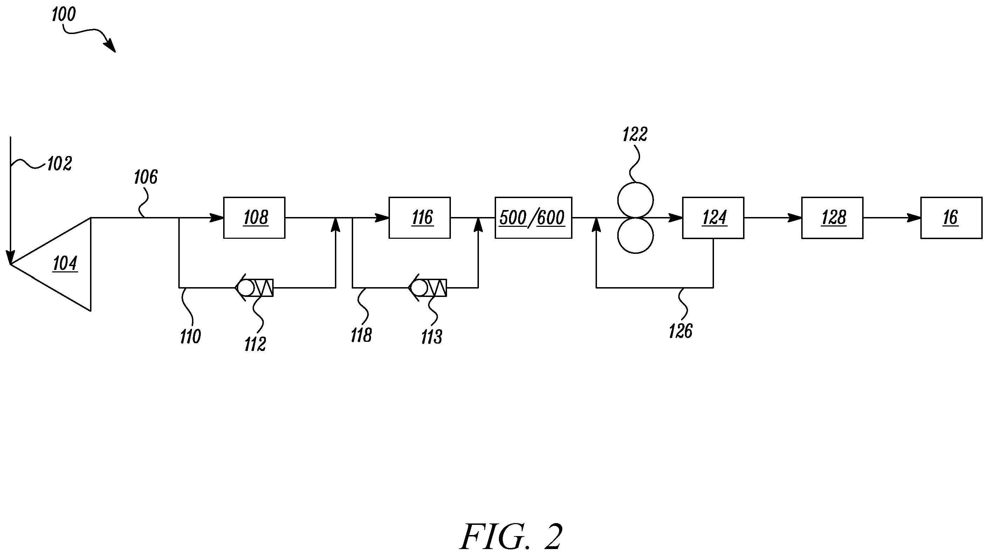

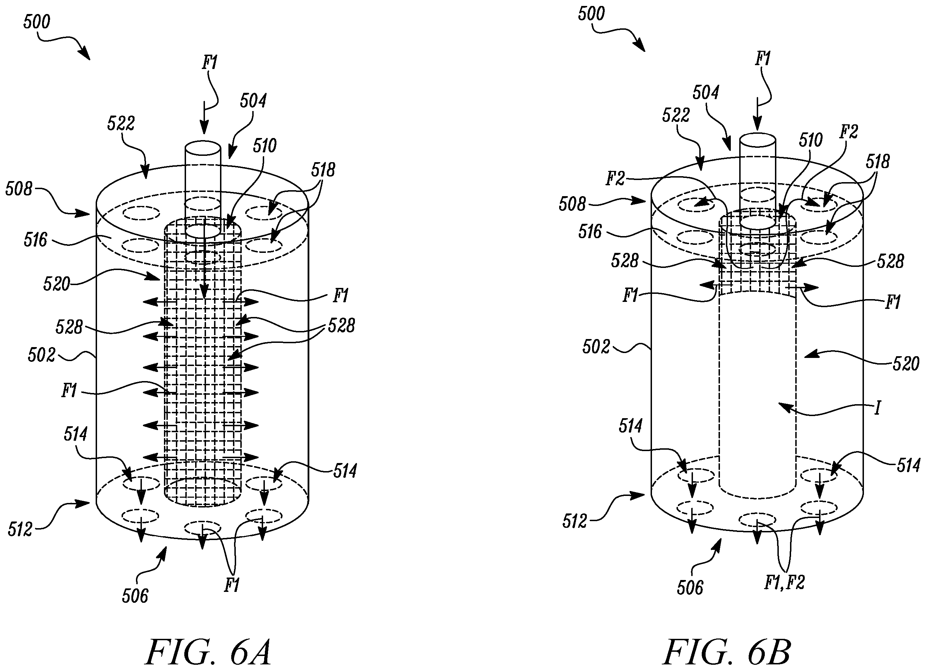

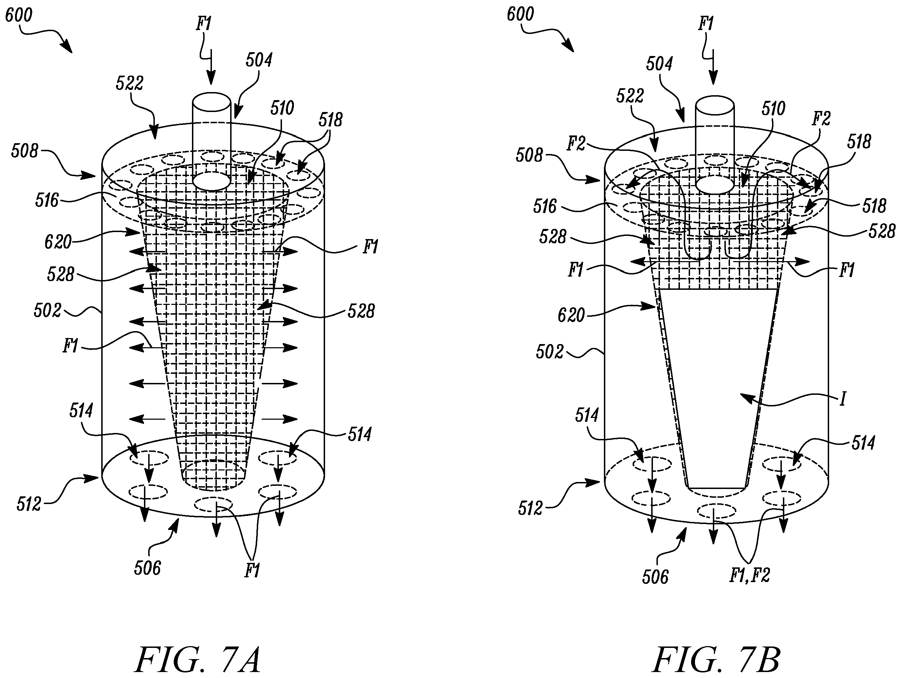

**FIG. 2** shows a schematic view of a gas turbine aircraft engine fuel system 100 for the gas turbine engine 10 of FIG. 1, in accordance with an embodiment of the present disclosure. The gas turbine engine 10 further includes the gas turbine aircraft engine fuel system 100. The gas turbine aircraft engine fuel system 100 includes a fuel source (not shown) disposed inside, for example, an aircraft. The fuel source stores the fuel, such as a fossil-based hydrocarbon fuel, such as kerosene, or any other aviation fuel, which is to be supplied to the gas turbine engine 10. As an example, the fuel may contain molecules from one or more chemical families of n-alkanes, iso-alkanes, cycloalkanes, and aromatics. As another example, the fuel may contain renewable hydrocarbons produced from biological or non-biological resources, otherwise known as sustainable aviation fuel (SAF). In each of the provided examples, the fuel may include one or more trace elements including, for example, sulphur, nitrogen, oxygen, inorganics, and metals. The fuel may further include water. The gas turbine engine 10 operates in conditions where the presence of water in fuel can lead to ice formation, especially at high altitudes and low temperatures. Specifically, under certain operational conditions, such as low temperatures, water present in the aviation fuel can freeze forming ice, and in rare events ice may accumulate (accrete) in a feed pipework of the aircraft that leads to the gas turbine engine 10. The formed ice may be subsequently released as a slug of high concentration ice. This is termed as transient ice I (shown in FIGS. 6B and 7B) or snow shower.

The gas turbine aircraft engine fuel system 100 further includes a fuel supply line 102. The fuel supply line 102 is configured to connect the fuel source with the gas turbine aircraft engine fuel system 100. As an example, the fuel supply line 102 may be a pipe made from a durable material that may withstand high pressure, temperature variations, and corrosive properties of the fuel.

The gas turbine aircraft engine fuel system 100 further includes a fuel pump 104, 122. The fuel pump 104 is a low pressure fuel pump 104 herein. The fuel pump 104 may be hereinafter interchangeably referred to as "the low pressure fuel pump 104". Further, the fuel pump 122 is a high pressure fuel pump 122 disposed downstream of the low pressure fuel pump 104. Further, the fuel pump 104 may be hereinafter interchangeably referred to as "the high pressure fuel pump 122". The fuel supply line 102 is configured to supply fuel to the low pressure fuel pump 104. In other words, the fuel supply line 102 carries the fuel under low pressure initially, from the fuel source to the low pressure fuel pump 104, which may operate at lower pressures of around 50 to 350 kilopascals, for example.

The gas turbine aircraft engine fuel system 100 further includes a fuel oil heat exchanger (FOHE) 108 to preheat the fuel to act as a heat sink for the oil system. The gas turbine aircraft engine fuel system 100 further includes a filter 116. The FOHE 108 is in fluid communication with the low pressure fuel pump 104 via a fuel line 106. The FOHE 108 is disposed between the low pressure fuel pump 104 and the filter 116 herein. Further, the filter 116 is a low pressure filter herein. The filter 116 may be hereinafter interchangeably referred to as "the low pressure filter 116". The filter 116 is disposed downstream of the FOHE 108. The filter 116 is configured to receive a flow of fuel from the FOHE 108 and to deliver filtered fuel downstream. The filter 116 removes any impurities in the fuel, safeguarding the components of the gas turbine engine 10 and/or the gas turbine aircraft engine fuel system 100 from potential damage. When the fuel having transient ice I and impurities is passed through the filter 116, some amount of the transient ice I may be captured by the filter 116. However, the remaining transient ice I may flow downstream to other components of the gas turbine aircraft engine fuel system 100. The gas turbine aircraft engine fuel system 100 further includes a first bypass valve 112 disposed in a first bypass line 110. The first bypass valve 112 is arranged in parallel with the FOHE 108. When the fuel having transient ice I passes through the FOHE 108, some of the transient ice I may be captured and melted by the FOHE 108, meanwhile the first bypass valve 112 opens and causes the fuel flow to bypass the FOHE 108 and be directly directed to the filter 116.

The gas turbine aircraft engine fuel system 100 further includes a second bypass valve 113 disposed in a second bypass line 118. The second bypass valve 113 is arranged in parallel with the low pressure filter 116. When the fuel having transient ice I passes through the filter 116, some of the transient ice I may be captured by the filter 116, meanwhile the second bypass valve 113 opens and causes the fuel flow to bypass the filter 116 and be directly directed downstream.

The gas turbine aircraft engine fuel system 100 further includes an ice capturing device 500, 600. The ice capturing device 500, 600 will be explained in detail with reference to FIGS. 6A to 7B.

The ice capturing device 500, 600 may be disposed downstream of the filter 116, in the bypass line 118 of the filter 116, and/or downstream of a fuel metering unit 124. The second bypass line 118 is hereinafter interchangeably referred to as "the bypass line 118". The ice capturing device 500, 600 is configured to collect transient ice I present in the fuel therewithin. In the illustrated embodiment of FIG. 2, the ice capturing device 500, 600 is disposed downstream of the filter 116. The filter 116 captures most of the incoming transient ice I of the fuel. However, some of the transient ice I may still appear downstream, either due to the bypass line 118 or because water passes through the filter 116 and later re-freezes due to local phenomenon.

The ice capturing device 500, 600 may be suitably disposed downstream of the filter 116, in the bypass line 118 of the filter 116, and/or downstream of the fuel metering unit 124 to capture any transient ice I that may not have been captured by the filter 116. The positioning of the ice capturing device 500, 600 at the aforementioned locations may ensure a steady, a consistent, and an adequately pressurized fuel supply to the gas turbine engine 10, which may enhance fuel control. The ice capturing device 500, 600 may also provide safety benefits, reduce a risk of contamination and damage, and may improve the reliability and longevity of the gas turbine aircraft engine fuel system 100. Thus, the ice capturing device 500, 600 may be disposed downstream of the low pressure filter 116 and/or in the bypass line 118 of the low pressure filter 116 to prevent ice from flowing towards and blocking the critical components of the gas turbine aircraft engine fuel system 100 that are positioned downstream of the low pressure filter 116.

The gas turbine aircraft engine fuel system 100 further includes the high pressure fuel pump 122. In the illustrated embodiment of FIG. 2, the high pressure fuel pump 122 is disposed downstream of the low pressure filter 116 and upstream of the fuel metering unit 124 of the gas turbine aircraft engine fuel system 100. The high pressure fuel pump 122 may raise a pressure of the fuel above a pressure of the combustion chamber 16, such that fuel can be injected into the combustion chamber 16. In some examples, an additional high pressure filter may be disposed downstream of the high pressure fuel pump 122.

In the illustrated embodiment of FIG. 2, the high pressure fuel pump 122 receives the low pressure fuel provided by the low pressure fuel pump 104 and increases the pressure to desired levels for effective combustion in the combustion chamber 16. As an example, the low pressure fuel pump 104 and the high pressure fuel pump 122 may be a positive displacement pump or a centrifugal pump.

The gas turbine aircraft engine fuel system 100 further includes the fuel metering unit 124 disposed downstream of the filter 116. The fuel metering unit 124 receives fuel from the high pressure fuel pump 122. The fuel metering unit 124 is configured to control the amount of fuel supplied to the combustion chamber 16. A fuel recirculation line 126 recirculates the fuel from the fuel metering unit 124 towards the high pressure fuel pump 122 where the recirculated fuel mixes with incoming fuel being directed to the high pressure fuel pump 122. As an example, the fuel metering unit 124 may use inputs (such as temperature, pressure, and power demand) from various sensors or a controller to regulate fuel flow. As the fuel metering unit 124 may contain sensitive components, it is desirable that only filtered fuel is provided to the fuel metering unit 124. This may further lead to enhanced reliability and a longer service life for critical components of the gas turbine aircraft engine fuel system 100. Thus, as the fuel metering unit 124 may contain sensitive components, it is desirable that only fuel (without any transient ice I) is provided to the fuel metering unit 124. Therefore, it may be desirable to dispose the ice capturing device 500, 600 upstream of the fuel metering unit 124.

Moreover, in the illustrated embodiment of FIG. 2, the gas turbine aircraft engine fuel system 100 may further include a high pressure strainer 128 disposed downstream of the fuel metering unit 124. Additionally, a provision of the ice capturing device 500, 600 downstream of the filter 116, in the bypass line 118 of the filter 116, and/or downstream of the fuel metering unit 124 may protect the high pressure strainer 128 from blockages from solid contaminants, e.g. ice, under normal operation.

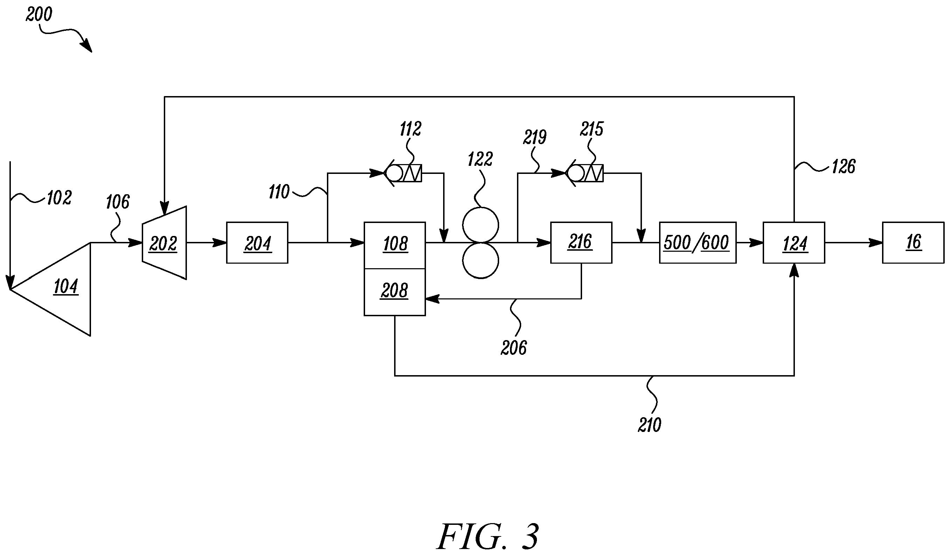

**FIG. 3** shows a schematic view of a gas turbine aircraft engine fuel system 200 for the gas turbine engine 10 of FIG. 1, in accordance with another embodiment of the present disclosure.

Referring to FIG. 3, the gas turbine aircraft engine fuel system 200 is substantially similar to the gas turbine aircraft engine fuel system 100 explained in relation to FIG. 2, with common components being referred to by the same numerals. However, the gas turbine aircraft engine fuel system 200 further includes a jet pump 202 disposed downstream of the low pressure fuel pump 104. Further, the fuel recirculation line 126 connects the fuel metering unit 124 with the jet pump 202. The jet pump 202 uses a small amount of high pressure motive fuel coming through the fuel recirculation line 126 to create suction and move fuel from one location to another.

The gas turbine aircraft engine fuel system 200 further includes a generator heat exchanger 204 disposed between the jet pump 202 and the FOHE 108. The generator heat exchanger 204 cools an electrical power system (not shown) of the aircraft by dissipating excess heat from the electrical power system to the fuel flowing through the fuel line 106 thereby make efficient use of waste heat.

The gas turbine aircraft engine fuel system 200 further includes a servo heater 208 operatively coupled with the FOHE 108. In the illustrated embodiment of FIG. 3, the servo heater 208 is used to additionally maintain or raise a temperature of the fuel so that it can melt ice and thereby protect servos, which have very small gaps or tight clearances that can be blocked by ice and malfunction. A filter 216 supplies the fuel through a fuel supply line 206 to the servo heater 208. The servo heater 208 increases the temperature of the fuel and supplies it to the fuel metering unit 124 unit via a fuel supply line 210.

Further, the gas turbine aircraft engine fuel system 200 includes the high pressure filter 216. The filter 216 is hereinafter interchangeably referred to as "the high pressure filter 216". The filter 216 is disposed downstream of the high pressure fuel pump 122. The filter 216 is configured to receive a flow of fuel from the high pressure fuel pump 122 and to deliver filtered fuel towards the fuel metering unit 124. The filter 216 removes any impurities present in the fuel, safeguarding the components of the gas turbine engine 10 and/or the gas turbine aircraft engine fuel system 100, 200 from potential damage. When the fuel having transient ice I (shown in FIGS. 6B and 7B) and impurities is passed through the filter 216, some amount of the transient ice I is captured by the filter 216. However, the remaining transient ice I may flow downstream to other components of the gas turbine aircraft engine fuel system 200. The gas turbine aircraft engine fuel system 200 further includes a second bypass valve 215 disposed in a second bypass line 219. The second bypass valve 215 is arranged in parallel with the high pressure filter 216. When the fuel having transient ice I passes through the high pressure filter 216, some of the transient ice I may be captured and melted in the high pressure filter 216, meanwhile the second bypass valve 215 opens and causes the fuel flow to bypass the high pressure filter 216 and be directly directed downstream.

Thus, the ice capturing device 500, 600 may be disposed downstream of the high pressure filter 216 and/or in the bypass line 118 of the high pressure filter 216 to prevent ice from flowing towards and blocking the critical components of the gas turbine aircraft engine fuel system 200 that are positioned downstream of the high pressure filter 216.

In the illustrated embodiment of FIG. 3, the ice capturing device 500, 600 is disposed downstream of the high pressure filter 216 and upstream of the fuel metering unit 124. Alternatively, the ice capturing device 500, 600 may be disposed in the second bypass line 219 or downstream of the fuel metering unit 124.

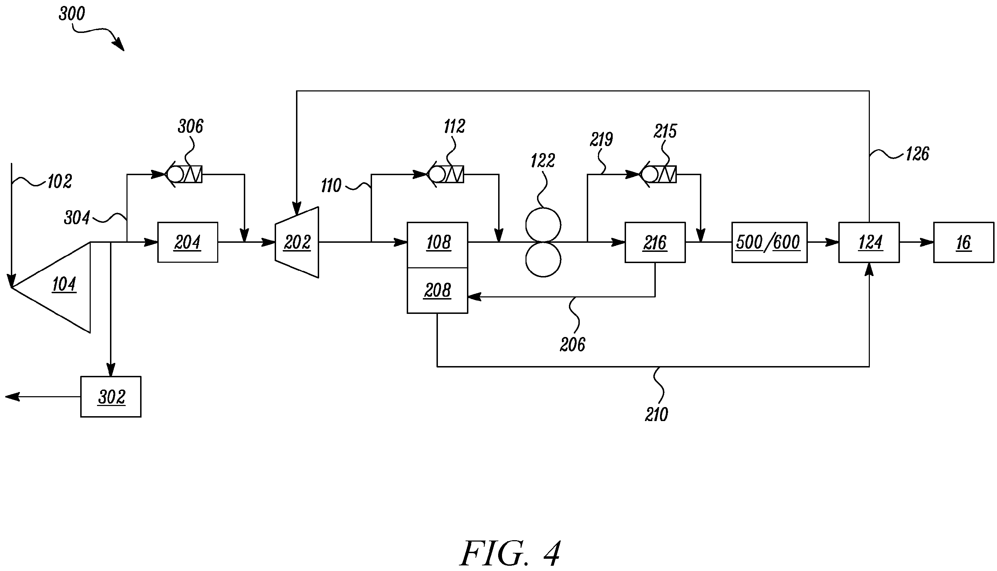

**FIG. 4** shows a schematic view of a gas turbine aircraft engine fuel system 300 for the gas turbine engine 10 of FIG. 1, in accordance with yet another embodiment of the present disclosure.

Referring to FIG. 4, the gas turbine aircraft engine fuel system 300 is substantially similar to the gas turbine aircraft engine fuel system 200 explained in relation to FIG. 3, with common components being referred to by the same numerals. However, the jet pump 202 is disposed downstream of the generator heat exchanger 204. The jet pump 202 is disposed between the generator heat exchanger 204 and the FOHE 108. The fuel is routed through the generator heat exchanger 204, managing the initial temperature of the fuel before it reaches the jet pump 202. The jet pump 202 further regulates the flow and pressure of the fuel optimizing fuel delivery to other components of the gas turbine aircraft engine fuel system 300.

Furthermore, the gas turbine aircraft engine fuel system 300 includes a third bypass valve 306 disposed in a third bypass line 304. The third bypass valve 306 is arranged in parallel with the generator heat exchanger 204 which allows fuel to bypass the generator heat exchanger 204 if the fuel temperature exceeds a safe limit, thereby maintaining fuel integrity. The gas turbine aircraft engine fuel system 300 further includes a fuel return valve 302 that transports additional fuel from a downstream end of the low pressure fuel pump 104 to the fuel source.

In the illustrated embodiment of FIG. 4, the ice capturing device 500, 600 is disposed downstream of the high pressure filter 216 and upstream of the fuel metering unit 124. Alternatively, the ice capturing device 500, 600 may be disposed in the second bypass line 219.

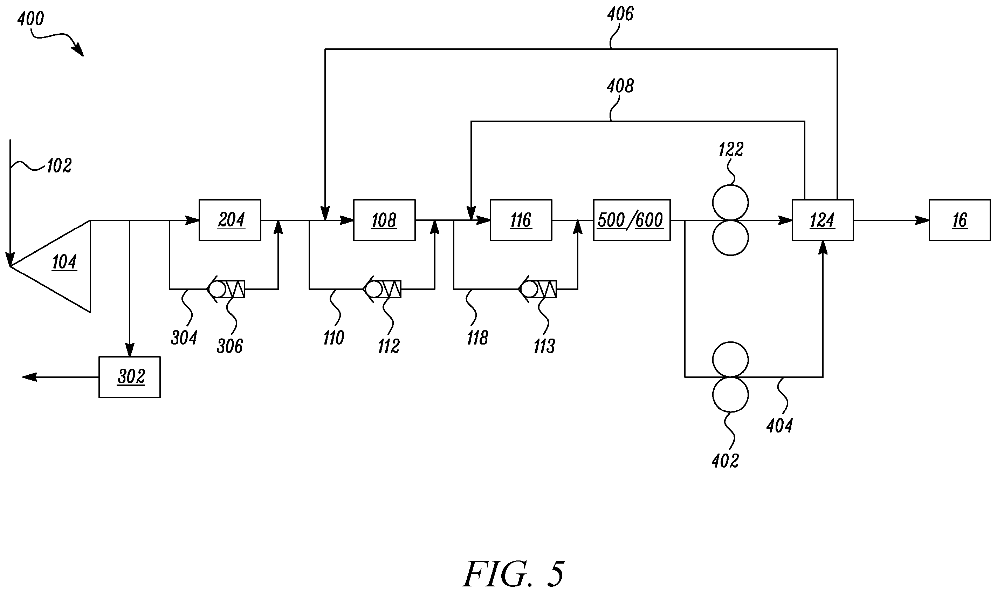

**FIG. 5** shows a schematic view of a gas turbine aircraft engine fuel system 400 for the gas turbine engine 10 of FIG. 1, in accordance with yet another embodiment of the present disclosure.

Referring to FIG. 5, the gas turbine aircraft engine fuel system 400 is substantially similar to the gas turbine aircraft engine fuel system 100, 300 explained in relation to FIGS. 2 and 3, with common components being referred to by the same numerals. The gas turbine aircraft engine fuel system 400 includes the generator heat exchanger 204 disposed between the low pressure fuel pump 104 and the FOHE 108. Further, the low pressure filter 116 is disposed downstream of the FOHE 108, and more specifically between the FOHE 108 and the high pressure fuel pump 122. Furthermore, the gas turbine aircraft engine fuel system 400 includes a servo pump 402 disposed in a fourth bypass line 404. The servo pump 402 is arranged in parallel with the high pressure fuel pump 122. In the illustrated embodiment of FIG. 5, the servo pump 402 may operate as a backup pump or a booster pump to ensure fuel delivery even if the high pressure fuel pump 122 is compromised or under high demand. The servo pump 402 may help to maintain the necessary fuel pressure for operation of the gas turbine engine 10, especially under varying flight conditions (altitude, speed, throttle position) and ensures stable combustion and performance of the gas turbine engine 10. The gas turbine aircraft engine fuel system 400 further includes a first recirculation line 406 and a second recirculation line 408. A portion of the fuel from the fuel metering unit 124 may be directed upstream of the FOHE 108 via the first recirculation line 406, whereas a portion of the fuel from the fuel metering unit 124 may be directed upstream of the low pressure filter 116 via the first recirculation line 406.

In the illustrated embodiment of FIG. 5, the ice capturing device 500, 600 is disposed downstream of the low pressure filter 116 and upstream of the high pressure fuel pump 122. Alternatively, the ice capturing device 500, 600 may be disposed in the second bypass line 118.

It should be further noted that a design of the gas turbine aircraft engine fuel system 100, 200, 300, 400 (see FIGS. 2 to 5), an arrangement of components of the gas turbine aircraft engine fuel system 100, 200, 300, 400, and/or type of components associated with the gas turbine aircraft engine fuel system 100, 200, 300, 400 as described herein is exemplary in nature. The gas turbine aircraft engine fuel system 100, 200, 300, 400 may include any other design, arrangement of components, and/or type of components, based on, for example, a type of the gas turbine engine 10 or a requirement of the aircraft.

**FIG. 6A** shows a schematic perspective view of the ice capturing device 500 for the gas turbine aircraft engine fuel system 100, 200, 300, 400 of the gas turbine engine 10 of FIG. 1, in accordance with an embodiment of the present disclosure. As an example, the ice capturing device 500 will be explained in relation to the gas turbine aircraft engine fuel system 100.

Referring to FIG. 6A, the ice capturing device 500 includes the housing 502 defining the first end 504 and the second end 506 opposite the first end 504. In the illustrated embodiment of FIG. 6A, the housing 502 is cylindrical in shape. Alternatively, the housing 502 may have any other shape as per requirements, such as, a square shape, a rectangular shape, and so on. The housing 502 includes an inlet portion 508 disposed at the first end 504 of the housing 502 and defining the at least one inlet port 510. In the illustrated embodiment of FIG. 6A, the at least one inlet port 510 is a single inlet port. The inlet port 510 is centrally disposed and allows an entry of the fuel into the ice capturing device 600. The housing 502 is configured to receive a fuel flow F1 therewithin via the at least one inlet port 510.

The housing 502 further includes an outlet portion 512 disposed at the second end 506 of the housing 502 and defining at least one outlet port 514. The at least one outlet port 514 includes a plurality of outlet ports 514 herein. The plurality of outlet ports 514 are arranged around a strainer 520 to receive the fuel flow F1 via the strainer 520 and eventually direct the fuel flow out of the ice capturing device 500. Further, the fuel flow F2 is configured to exit the housing 502 via the at least one outlet port 514.

The ice capturing device 500 further includes the strainer 520 disposed within the housing 502 and coupled with the at least the inlet portion 508. The strainer 520 extends from the first end 504 towards the second end 506 of the housing 502. In the illustrated embodiment of FIG. 6A, the strainer 520 extends from the first end 504 to the second end 506. The at least one inlet port 510 is in fluid communication with the at least one outlet port 514 via the strainer 520. The strainer 520 is configured to collect transient ice I (shown in FIG. 6B) present in the fuel flow F1 therewithin. The strainer 520 is concentrically disposed within the housing 502. In this way, the fuel flow F1 through the strainer 520 may be evenly distributed to the plurality of outlet ports 514. In the illustrated embodiment of FIG. 6A, the strainer 520 is cylindrical in shape. The strainer 520 having the cylindrical shape may be easy to incorporate within the housing 502. The strainer 520 may ensure capturing a maximum volume of the transient ice I from the fuel flow F1 in low ambient temperatures conditions. In an embodiment, the strainer 520 is made of a metallic material. In some examples, the strainer 520 may be made of aluminium or stainless steel. The material of the strainer 520 may be decided so that the strainer 520 may withstand high fuel pressure and mechanical stress without failure.

The strainer 520 defines a plurality of openings 528 to allow passage of the fuel flow F1 therethrough. In the illustrated embodiment of FIG. 6A, the size of each of the plurality of openings 528 is from 150 micrometers (µm) to 1000 µm. The plurality of openings 528 may be arranged in a mesh pattern that may allow a passage of fuel but restrict the solid particles of the transient ice I inside the strainer 520.

Further, the inlet portion 508 includes the plate 516 disposed between the first and second ends 504, 506. The plate 516 defines a plurality of bypass ports 518. A bypass fuel flow F2 is directed from the at least one inlet port 510 towards the at least one outlet port 514 via the plurality of bypass ports 518 when the strainer 520 is filled with the transient ice I. When the strainer 520 of the ice capturing device 500 becomes saturated with the transient ice, the bypass fuel flow F2 is activated, allowing the fuel to bypass the strainer 520, ensuring uninterrupted fuel flow to the gas turbine engine 10 and preventing blockages in downstream components of the gas turbine aircraft engine fuel system 100. In this way, the fuel flow F1 can exit the ice capturing device 500 even when the the ice capturing device 500 is clogged with ice I. Furthermore, the plate 516 defines a chamber 522 in fluid communication with each of the plurality of bypass ports 518. The chamber 522 is configured to receive the bypass fuel flow F2 from the at least one inlet port 510 and direct the bypass fuel flow F2 towards the plurality of bypass ports 518. Thus, the chamber 522 may facilitate a receipt of the bypass fuel flow F2 via the inlet port 510 and direct the bypass fuel flow F2 towards the outlet ports 514 via the bypass ports 518.

**FIG. 6B** shows a schematic perspective view of the ice capturing device 500 of FIG. 6A depicting a collection of the transient ice I in the ice capturing device 500.

Referring to FIG. 6B, during the operation of the gas turbine aircraft engine fuel system 100, the fuel flow F1 enters the ice capturing device 500. However, the bypass fuel flow F2 is directed from the at least one inlet port 510 towards the at least one outlet port 514 via the plurality of bypass ports 518 when the strainer 520 is filled with the transient ice I, thereby ensuring an uninterrupted fuel flow to the gas turbine engine 10. It should be noted that the transient ice I that is collected in the strainer 520 may eventually melt and flow downstream of the ice capturing device 500 via the outlet ports 514, when a temperature within the ice capturing device 500 increases.

**FIG. 7A** shows a schematic perspective view of the ice capturing device 600 for the gas turbine aircraft engine fuel system 100, 200, 300, 400 of the gas turbine engine 10 of FIG. 1, in accordance with another embodiment of the present disclosure. As an example, the ice capturing device 600 will be explained in relation to the gas turbine aircraft engine fuel system 100.

Referring to FIG. 7A, the ice capturing device 600 is substantially similar to the ice capturing device 500 explained in relation to FIGS. 6A and 6B, with common components being referred to by the same numerals. However, in the illustrated embodiment of FIG. 7A, the strainer 620 is frustoconical in shape. Specifically, a diameter of the strainer 620 is maximum proximal to the inlet portion 508 and decreases vertically, such that a minimum diameter is defined proximal to the second end 506.

**FIG. 7B** is a schematic perspective view of the ice capturing device 600 of FIG. 7A depicting a collection of the transient ice I in the ice capturing device 600. As shown in FIG. 7B, during the operation of the gas turbine aircraft engine fuel system 100, the fuel flow F1 enters the ice capturing device 600. However, the bypass fuel flow F2 is directed from the at least one inlet port 510 towards the at least one outlet port 514 via the plurality of bypass ports 518 when the strainer 620 is filled with the transient ice I, thereby ensuring an uninterrupted fuel flow to the gas turbine engine 10.

Referring to FIGS. 1 to 7B, the ice capturing device 500, 600 may protect critical components of the gas turbine aircraft engine fuel system 100, 200, 300, 400, such as, the fuel metering unit 124, the high pressure strainer 128, and/or the high pressure fuel pump 122, and may also ensure a continuous supply of the fuel flow to the gas turbine engine 10.

The ice capturing device 500, 600 is installed within the gas turbine aircraft engine fuel system 100, 200, 300, 400 to remove or at least minimise the presence of transient ice in the fuel being supplied to the gas turbine engine 10. The ice capturing device 500, 600 may advantageously minimise the problems occurring due to unwanted presence of the transient ice I along the fuel line 106 of the gas turbine aircraft engine fuel system 100, 200, 300, 400. The ice capturing device 500, 600 may protect components of the gas turbine aircraft engine fuel system 100, 200, 300, 400 and the gas turbine engine 10 by preventing blockages due to the transient ice I. The ice capturing device 500, 600 may be simple in design, easy to manufacture, and cost-effective to manufacture and install.

The design of the ice capturing device 500, 600 may effectively capture and manage the transient ice I, may preventing blockage in downstream components of the gas turbine aircraft engine fuel system and the gas turbine engine 10, may optimize fuel flow management, and may enhance the reliability of the gas turbine aircraft engine fuel system 100, 200, 300, 400 by preventing ice-induced disruptions. When the strainer 520, 620 of the ice capturing device 500, 600 becomes saturated with the transient ice I, the bypass flow F2 is activated, allowing a portion of the fuel to bypass the strainer 520, thereby ensuring the uninterrupted fuel flow to the gas turbine engine 10. Overall, the ice capturing device 500, 600 may provide enhanced engine reliability, and a longer service life for critical components of the gas turbine aircraft engine fuel system 100.

Further, the capturing of the transient ice I by the ice capturing device 500, 600 may prevent a reduction in engine power and may allow acceleration of the gas turbine engine 10 as needed. Furthermore, the capturing of the transient ice I by the ice capturing device 500, 600 may reduce a probability of situations, such as "Loss of Thrust Control" (LOTC).

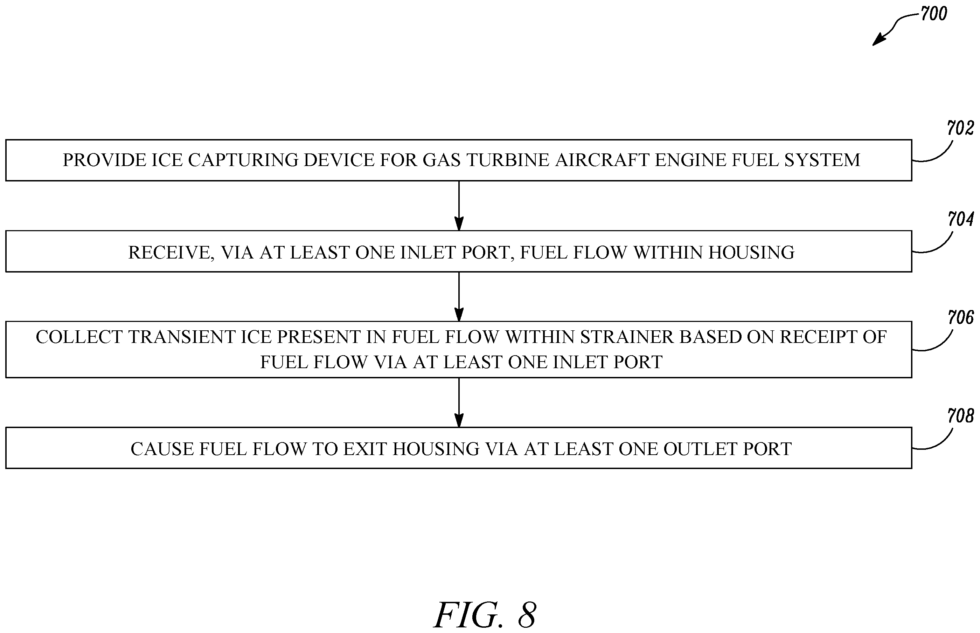

**FIG. 8** shows a flowchart depicting various steps of a method 700 for controlling a flow of the transient ice I through the gas turbine aircraft engine fuel system 100, 200, 300, 400 (see FIGS. 2, 3, 4, and 5).

Referring to FIGS. 1 to 8, at step 702, the ice capturing device 500, 600 is provided. The ice capturing device 500, 600 includes the housing 502 defining the first end 504 and the second end 506 opposite the first end 504. The housing 502 includes the inlet portion 508 disposed at the first end 504 of the housing 502 and defining the at least one inlet port 510. The housing 502 further includes the outlet portion 512 disposed at the second end 506 of the housing 502 and defining the at least one outlet port 514. The ice capturing device 500, 600 further includes the strainer 520, 620 disposed within the housing 502 and coupled with the at least the inlet portion 508. The strainer 520, 620 extends from the first end 504 towards the second end 506. The at least one inlet port 510 is in fluid communication with the at least one outlet port 514 via the strainer 520, 620.

At step 704, the fuel flow F1 is received within the housing 502 via the at least one inlet port 510. At step 706, the transient ice I present in the fuel flow F1 is collected within the strainer 520, 620 based on the receipt of the fuel flow F1 via the at least one inlet port 510. At step 708, the fuel flow F1 is caused to exit the housing 502 via the at least one outlet port 514.

The inlet portion 508 further includes the plate 516 disposed between the first and second ends 504, 506. The plate 516 defines the plurality of bypass ports 518. The method 700 further includes a step (not shown) at which the bypass fuel flow F2 is directed from the at least one inlet port 510 towards the at least one outlet port 514 via the plurality of bypass ports 518 when the strainer 520, 620 is filled with the transient ice I.

The plate 516 defines the chamber 522 in fluid communication with each of the plurality of bypass ports 518. The method 700 further includes a step (not shown) at which the bypass fuel flow F2 is received within the chamber 522. The bypass fuel flow F2 is directed towards the plurality of bypass ports 518 via the chamber 522.

The method 700 further includes a step (not shown) at which the transient ice I that is separated from the fuel flow F1 is caused to melt based on an increase in a temperature within the housing 502. The method 700 further includes a step (not shown) at which water that is generated based on melting of the transient ice I is caused to flow downstream of the ice capturing device 500, 600 via the at least one outlet port 514. Thus, the ice capturing device 500, 600 does not require any additional mechanism or maintenance strategies to remove the clogged transient ice I that may be retained within the strainer 520, 620.

The method 700 may be employed within the gas turbine aircraft engine fuel system 100, 200, 300, 400 to remove or at least minimise the presence of transient ice in the fuel being supplied to the gas turbine engine 10. Thus, the method 700 may advantageously minimise problems occurring due to presence of the transient ice I along the fuel line 106 of the gas turbine aircraft engine fuel system 100, 200, 300, 400. The method 700 described herein may protect the components of the gas turbine aircraft engine fuel system and the gas turbine engine 10 from blockages. The ice capturing device 500, 600 that is used to realize the method 700 may be simple in design, easy to manufacture, and cost-effective to manufacture and install.

The method 700 may allow effective capturing and managing of the transient ice I, may prevent blockages in downstream components of the gas turbine aircraft engine fuel system 100, 200, 300, 400 and the gas turbine engine 10, may optimize fuel flow management, and may enhance a reliability of the gas turbine aircraft engine fuel system 100, 200, 300, 400 by preventing ice-induced disruptions. The ice capturing device 500, 600 may be disposed at a number of locations in the gas turbine aircraft engine fuel system 100, 200, 300, 400, based on application requirements. Further, the ice capturing device 500, 600 may be disposed by making minimum adjustments to the gas turbine engine 10 and/or the gas turbine aircraft engine fuel system 100, 200, 300, 400.

Further, the capturing of the transient ice I using the method 700 may prevent the reduction in engine power and may allow acceleration of the gas turbine engine 10 as needed. Furthermore, the capturing of the transient ice I using the method 700 may reduce the probability of situations, such as LOTC.

Various examples have been described, each of which comprise various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. An ice capturing device (500, 600) for a gas turbine aircraft engine fuel system (100, 200, 300, 400), the ice capturing device (500, 600) comprising:
a housing (502) defining a first end (504) and a second end (506) opposite the first end (504), the housing (502) including:
an inlet portion (508) disposed at the first end (504) of the housing (502) and defining at least one inlet port (510), the housing (502) being configured to receive a fuel flow (F1) therewithin via the at least one inlet port (510); and
an outlet portion (512) disposed at the second end (506) of the housing (502) and defining at least one outlet port (514), the fuel flow (F1) being configured to exit the housing (502) via the at least one outlet port (514); and
a strainer (520, 620) disposed within the housing (502) and coupled with at least the inlet portion (508), the strainer (520, 620) extending from the first end (504) towards the second end (506), the at least one inlet port (510) being in fluid communication with the at least one outlet port (514) via the strainer (520, 620), the strainer (520, 620) being configured to collect transient ice (I) present in the fuel flow (F1) therewithin;
the ice capturing device (500, 600) being **characterised in that** the inlet portion (508) further includes a plate (516) disposed between the first and second ends (504, 506), the plate (516) defining a plurality of bypass ports (518), a bypass fuel flow (F2) is directed from the at least one inlet port (510) towards the at least one outlet port (514) via the plurality of bypass ports (518) when the strainer (520, 620) is filled with the transient ice (I).

2. The ice capturing device (500, 600) of claim 1, wherein the plate (516) defines a chamber (522) in fluid communication with each of the plurality of bypass ports (518), the chamber (522) configured to receive the bypass fuel flow (F2) from the at least one inlet port (510) and direct the bypass fuel flow (F2) towards the plurality of bypass ports (518).

3. The ice capturing device (500, 600) of claim 1 or 2, wherein the at least one inlet port (510) is a single inlet port.

4. The ice capturing device (500, 600) of any preceding claim, wherein the at least one outlet port (514) includes a plurality of outlet ports (514).

5. The ice capturing device (500, 600) of any preceding claim, wherein the strainer (520, 620) defines a plurality of openings (528) to allow passage of the fuel flow (F1) therethrough, a size of each of the plurality of openings (528) is from 150 micrometers (µm) to 1000 µm.

6. The ice capturing device (500, 600) of any preceding claim, wherein the housing (502) is cylindrical in shape.

7. The ice capturing device (500, 600) of any preceding claim, wherein the strainer (520, 620) is made of a metallic material.

8. The ice capturing device (500, 600) of any preceding claim, wherein the strainer (520, 620) is made of aluminium or stainless steel.

9. The ice capturing device (500, 600) of any preceding claim, wherein the strainer (520, 620) is cylindrical in shape or frustoconical in shape.

10. The ice capturing device (500, 600) of any preceding claim, wherein the strainer (520, 620) is concentrically disposed within the housing (502).

11. A gas turbine aircraft engine fuel system (100, 200, 300, 400) comprising:
a filter (116, 216);
a fuel metering unit (124) disposed downstream of the filter (116, 216); and
the ice capturing device (500, 600) of any preceding claim.

12. The gas turbine aircraft engine fuel system (100, 200, 300, 400) of claim 11, wherein the ice capturing device (500, 600) is disposed downstream of the filter (116, 216), in a bypass line (118, 215) of the filter (116, 216), and/or downstream of the fuel metering unit (124).

13. A gas turbine engine (10) including the gas turbine aircraft engine fuel system (100, 200, 300, 400) of claim 11 or 12.

14. A method (700) for controlling a flow of transient ice (I) through a gas turbine aircraft engine fuel system (100, 200, 300, 400), the method (700) comprising:
providing an ice capturing device (500, 600) including:
a housing (502) defining a first end (504) and a second end (506) opposite the first end (504), the housing (502) including:
an inlet portion (508) disposed at the first end (504) of the housing (502) and defining at least one inlet port (510); and
an outlet portion (512) disposed at the second end (506) of the housing (502) and defining at least one outlet port (514); and
a strainer (520, 620) disposed within the housing (502) and coupled with at least the inlet portion (508), the strainer (520, 620) extending from the first end (504) towards the second end (506), the at least one inlet port (510) being in fluid communication with the at least one outlet port (514) via the strainer (520, 620);
receiving, via the at least one inlet port (510), a fuel flow (F1) within the housing (502);
collecting transient ice (I) present in the fuel flow (F1) within the strainer (520, 620) based on a receipt of the fuel flow (F1) via the at least one inlet port (510); and
causing the fuel flow (F1) to exit the housing (502) via the at least one outlet port (514),
the method being **characterised in that** the inlet portion (508) includes a plate (516) disposed between the first and second ends (504, 506), and the method further comprises directing a bypass fuel flow (F2) from the at least one inlet port (510) towards the at least one outlet port (514) via the plurality of bypass ports (518) when the strainer (520, 620) is filled with the transient ice (I).

15. The method (700) of claim 17, wherein the plate (516) defines a chamber (522) in fluid communication with each of the plurality of bypass ports (518), the method (700) further comprising:
receiving the bypass fuel flow (F2) within the chamber (522); and
directing the bypass fuel flow (F2) towards the plurality of bypass ports (518) via the chamber (522).
